# EUROPEAN PATENT APPLICATION

(11) **EP 1 317 125 A1**
(43) Date of publication of application: **04.06.2003**
(21) Application number: 02025316.7
(22) Date of filing: 13.11.2002
(51) Int. Cl.: H04N 1/00

(54) **Control arrangement adaptable to any kind of professional-scale and/or amateur-scale colour-photograph development and printing laboratory for obtaining corresponding digital photographs**

(30) Priority: 29.11.2001 IT PN20010084
(71) Applicant: G.P.E. S.r.l., 33080 Azzano Decimo, PN (IT)
(72) Inventor: Gregoris, Giuseppe, 33080 Azzano Decimo (IT)
(74) Representative: Dalla Rosa, Adriano

(57) **Abstract**

The arrangement comprises imaging means (24) for the formation of virtual digital images, which are operationally connected with a personal computer (13) and are adapted to receive from the latter the stored negative virtual digital images and to selectively reconstitute the same virtual digital images; a rotating disk (26) provided with colour filters (27, 28, 29) to colour each negative virtual digital image contained in the imaging means (24); piezo-electric actuators cooperating with said imaging means (24) so as to cause said imaging means to displace into such positions as to enable high-definition images to be formed; a moving-type diaphragm or shutter (25) co-operating with said imaging means (24) and movable from a first operational position to a second operational position to respectively bar or enable the passage of the light beam through said imaging means (24) and the colour-filter disk (26), and the resulting projection of the virtual digital images, with mutually overlapping colours, onto the photographic paper (60); as well as control and processing means (CPU 50) operated via at least an associated keyboard (61) and connected to said personal computer (13), said imaging means (24), said rotating disk (26), said piezo-electric actuators, said shutter (25), a lighting arrangement (20) for the illumination of the photographic paper (60) and the other parts composing the photo-finishing equipment of each photographic laboratory.

## Description

The present invention refers to a control arrangement, which is capable of being adapted to any kind of professional-type and/or amateur-type photo-finishing laboratory for developing and printing colour photographs, whoever the manufacturer and whichever the make, i.e. the construction and operating structures of such a laboratory may also be, in view of obtaining corresponding digital photographs.

Professional-scale and/or amateur-scale photographic laboratories of the most varied kinds and makes, which are sometime referred to as "mini-labs" in the art, are largely known to be equipped and fitted so as to be able to produce colour photographs of any brightness, hue and print size as desired. These laboratori8es generally include a printer, or printing machine, provided with photographic paper in view of obtaining a plurality of photographic prints starting from respective negatives, and a developing machine associated to such a printing machine, in which said photographic paper is developed in view of obtaining the related positive prints.

Each such laboratory is pre-set for developing and printing photographic papers that are compatible with the particular operation and construction of the related component parts and that furthermore are such as to enable the desired results to be obtained in terms of sizes and characteristics that the printed pictures shall or are requested to feature.

Furthermore, these laboratories do not allow for the structural composition thereof to be possibly modified in view of obtaining, if required, photographs using different operational techniques or methods, such as for instance digital photographs, since they are designed to solely work with this photographic technique of a traditional type and, therefore, are not capable of producing photographs by photographic techniques of a different kind.

On the other hand, the digital photographic technique that is currently used in particular development and printing machines made by various manufacturers, which by the way are quite complicated and expensive, has in the meanwhile been improved to such an extent that it actually enables digital photographs to be obtained in quite large quantities and rather quickly, i.e. at a fast rate, with the possibility of printing files deriving from scanned slides, photographs and images regardless of the photographic technique used to take them, to the point that extremely interesting prospects actually exist for the future development of this kind of photographic technique.

It therefore is a purpose of the present invention to make use of the advantages offered by the digital photographic technique in such a manner as to enable digital colour photographs to be obtained also in professional-scale and/or amateur-scale photo-finishing laboratories for the development and print of photographs using the traditional photographic technique.

According to the present invention, this aim is reached through the use of a control arrangement capable of being adapted to any kind of professional-scale and/or amateur-scale photo-finishing laboratories, thanks to which these photographic laboratories are capable of controlling in a traditional manner the course and progress of the various development and printing operations in accordance with the features and characteristics that the so produced photographs are required to show, wherein these development and print operations are in any case performed in the same manner as this is done in the current photographic laboratories, without any need arising for any component part or even the operation thereof to be modified to any extent.

The control arrangement of the invention is implemented by embodying the characteristics as substantially set forth and recited in the appended claims.

Anyway, features and advantages of the present invention may be more readily understood from the description that is given below by way of nonlimiting example with reference to the accompanying drawings, in which:
- Figure 1 is a schematic front view of the control arrangement according to the present invention, as inserted in a box-like container adaptable to the respective laboratories;
- Figure 2 is a front perspective view of the various component parts of the control arrangement shown in Figure 1;
- Figure 3 is an enlarged front perspective view of the box-like casing of one of the component parts of the control arrangement shown in Figure 1;

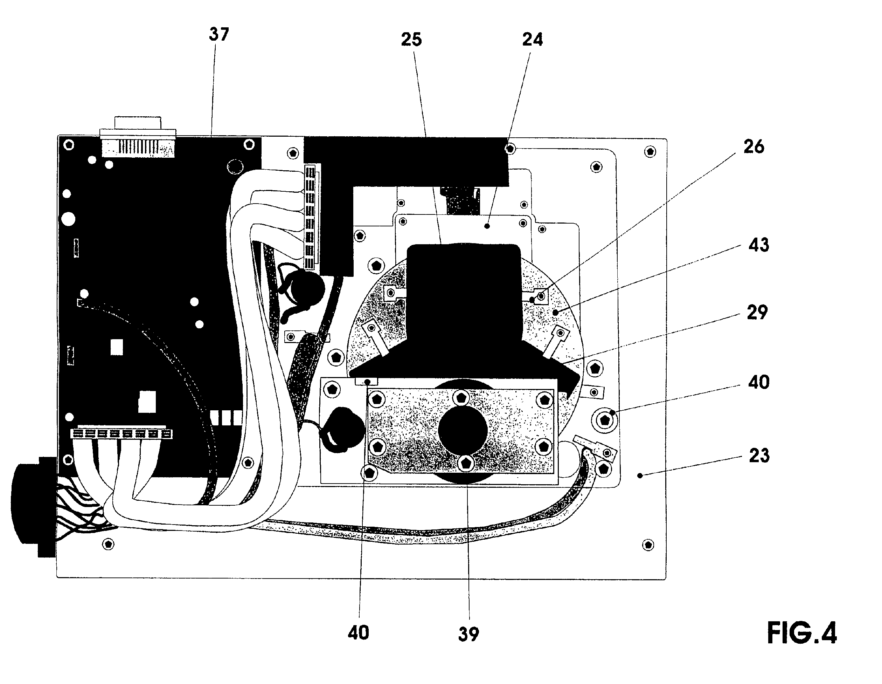

- Figure 4 is a plan view of the box-like casing shown in Figure 3, as illustrated in a disassembled condition to better show its various component parts;
- Figure 5 is another plan view of the box-like casing illustrated in Figure 4, with one of the component parts thereof displaced into a first operating position thereof;

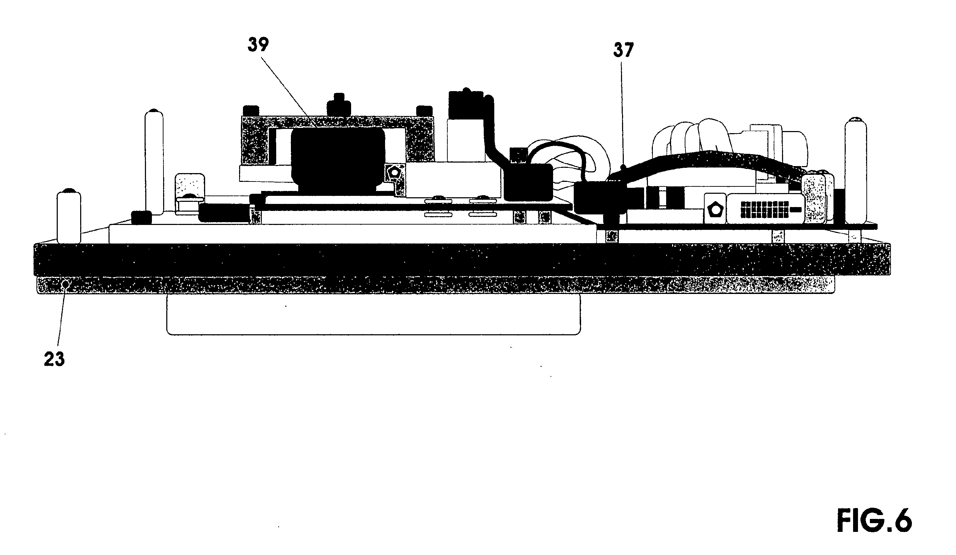

- Figure 6 is a front view of the box-like casing illustrated in Figure 5;
- Figure 7 is a bottom view of the box-like casing illustrated in Figures 5 and 6;
- Figure 8 is a perspective exploded view of the various component parts of the arrangement in control of the process for the formation of the digital images;
- Figure 9 is a plan view of the box-like casing of the invention with one of the component parts thereof displaced into a second operating position;
- Figure 10 is a plan view of the box-like casing of the invention with one of the component parts thereof displaced into a third operating position;
- Figures 11-11a, b, c, d are diagrammatical views of the composition of high-definition digital images;
- Figure 12 is a view of the wiring and connection diagram of the various component parts of the control arrangement according to the present invention.

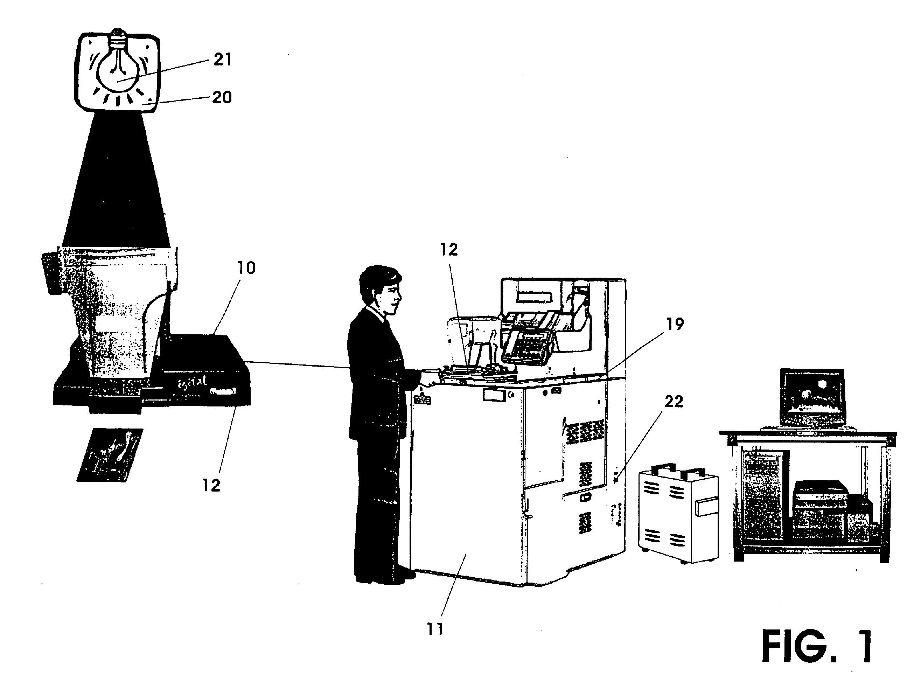

The above mentioned Figures are shown to schematically illustrate a control arrangement 10 according to the present invention, which is capable of being adapted to any kind of either professional-scale and/or amateur-scale photo-finishing laboratory for developing and printing colour photographs, also referred to as "mini-lab" in the art, in which laboratories may be produced by different manufacturers and be implemented to feature the most varied construction and operating structures. One of such laboratories, as indicated generally at 11, can be seen in Figure 1, where it is illustrated schematically. This laboratory can be noticed to comprise a printing machine, or printer, provided with photographic paper in view of obtaining a plurality of photographic prints starting from respective negatives, and a developing machine associated to such a printing machine, in which said photographic paper is developed in view of obtaining the related positive prints. The control arrangement of the invention is arranged so as to be able to be mounted on professional-type and/or amateur-type laboratories operating as described, in view of enabling digital colour photographs to be obtained in any kind of laboratory that might also be used.

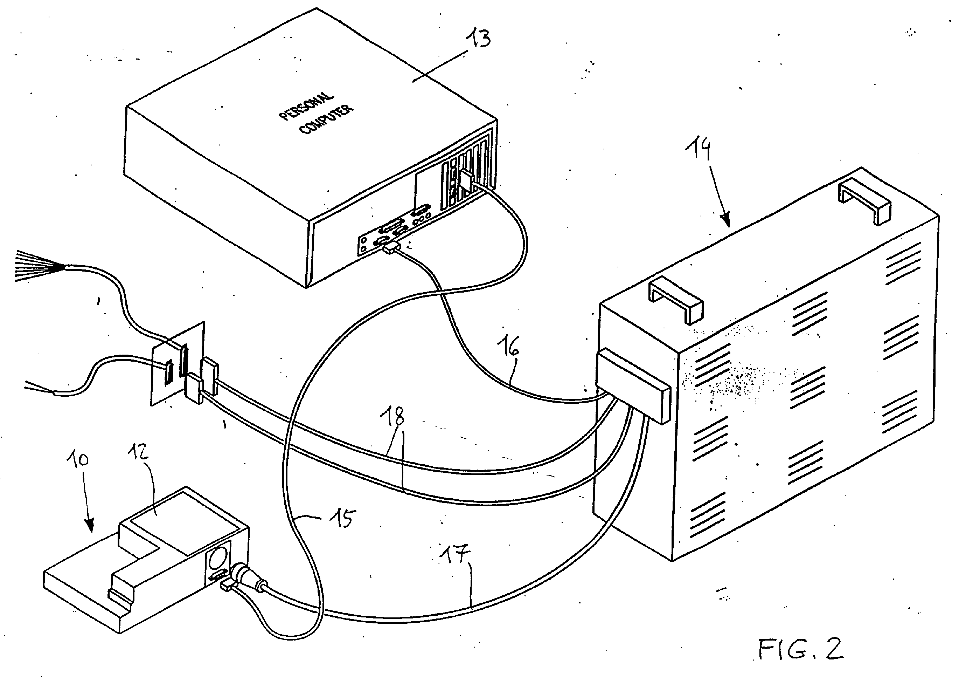

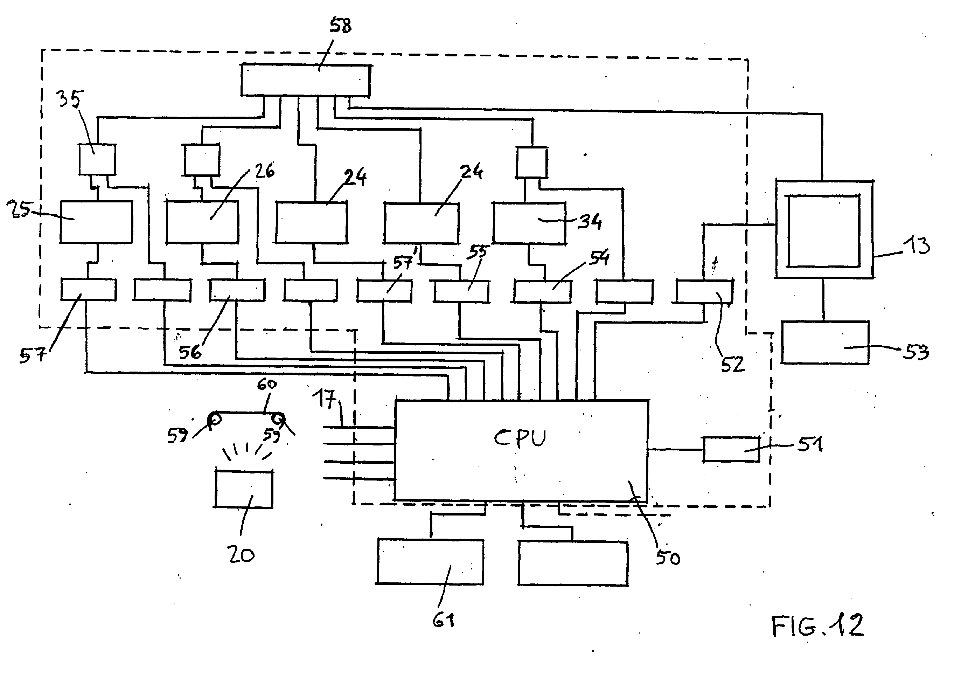

This control arrangement 10 is substantially constituted by a box-like container 12 made in the manner as more closely described further on, in which said box-like container is so shaped and sized as to be able to fit in and adapt to any kind of existing photo-finishing laboratory for developing and printing both black-and-white and colour photographs, and is operationally connected via serial cables (see Figure 2) to a personal computer 13 or similar information-technology data-processing equipment, the related photo-finishing laboratory (not shown), and an electronic control circuit which is housed in a box-like casing 14 and has such features as will described to a greater detail further on. In particular, in Figure 12 it can be noticed that said box-like container 12 is shown to be connected via the cable 15 to the personal computer 13, whereas the electronic control circuit of the box-like casing 14 is connected via the cable 16 to the personal computer 13, via the cable 17 to the control circuits of the related photo-finishing laboratory, which are adapted to determine the regular operation thereof, and via the cable 18 either directly or through interface board to the keyboard (not shown) associated to said photo-finishing laboratory and provided for setting and entering the various data inputs needed to control the operation of the laboratory in the desired manner and to ultimately obtain the digital photographs printed in the photographic paper of the same laboratory.

The personal computer 13 is in turn provided so as to be adapted to process and set the binary-coded data relating to the digital photographs to be obtained in the photo-finishing laboratory, and namely the selected type and number of photographs to be developed and printed, as well as the characteristics that such photographs shall possess in terms of brightness, colours (hue, saturation, gradation, sharpness, etc.), size and possible special features as may be required by the customer.

In particular, the personal computer 13 is preliminarily set by entering the required data concerning the types, numbers and characteristics of the photographs to be obtained for each order placed by one or more customers; these data are then stored in the CPU of said computer as processed into the computer programmes for finishing and producing the digital photographic prints concerning such a customer or such customers, as the case may be. The files of the digital images are first entered and stored in the personal computer, thereby forming the virtual photographic images, as coded in a digital form, which can be displayed on the screen of the computer monitor and which can be processed and tampered with at will, individually or collectively, before the printing thereof is started, in view of obtaining special effects, or for any other reason whatsoever, as far as their arrangement, progressive printing order, format and size, number of copies to be printed, possible blow-ups, particular features or items to be specially emphasized in the photographic prints, photo-retouches and any other artifice are concerned as may possibly be requested by the customer or customers for the final prints. In this manner, when all orders with the virtual digital photographic images to be developed and printed have so been set, it possible for the automatic or manual execution of one or several development and printing orders at a time, or even a sequence of separate orders, to be commanded in the same personal computer, and such an execution of the related development and printing orders as commanded in the personal computer is carried out through the control arrangement 10 of the present invention, to which the binary-coded data concerning the existing virtual digital photographic images are selectively sent by the personal computer 13, thereby forming corresponding virtual digital photographic images in the manner that will be described to greater detail further on, and the virtual digital photographic images that are formed in this way are then projected onto the photographic paper of the related photo-finishing laboratory, thereby exposing it, so that through the subsequent development of such a photographic paper, as carried out in the same photo-finishing laboratory, the corresponding positive photographic prints are obtained in a digital form.

Referring now to Figure 1, it can be noticed that the box-like container 12 is illustrated as applied to a professional-scale and/or amateur-scale photo-finishing laboratory 11 of a general kind whatsoever. It can be noticed as being appropriately secured on the top surface 19 of the same laboratory 11, in a position below the lighting unit 20 in which the lamp 21 is contained in a position coinciding with the optical centre to illuminate the virtual digital photographic image formed in the position that shall be described in greater detail further on, and project said virtual image on to the photographic paper contained in the printing-developing machine assembly 22 of the photo-finishing laboratory, and arranged in a position coinciding with the light beam generated by such a lighting unit 20, under resulting exposure of the photographic paper and subsequent development of the so exposed photographic paper, thereby forming the ultimate digital photographic print.

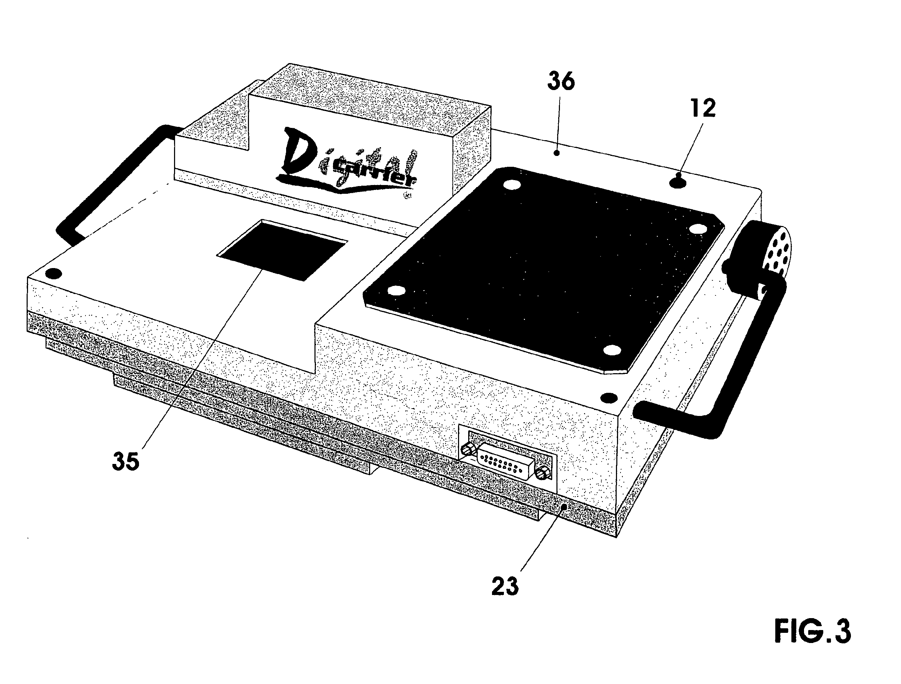

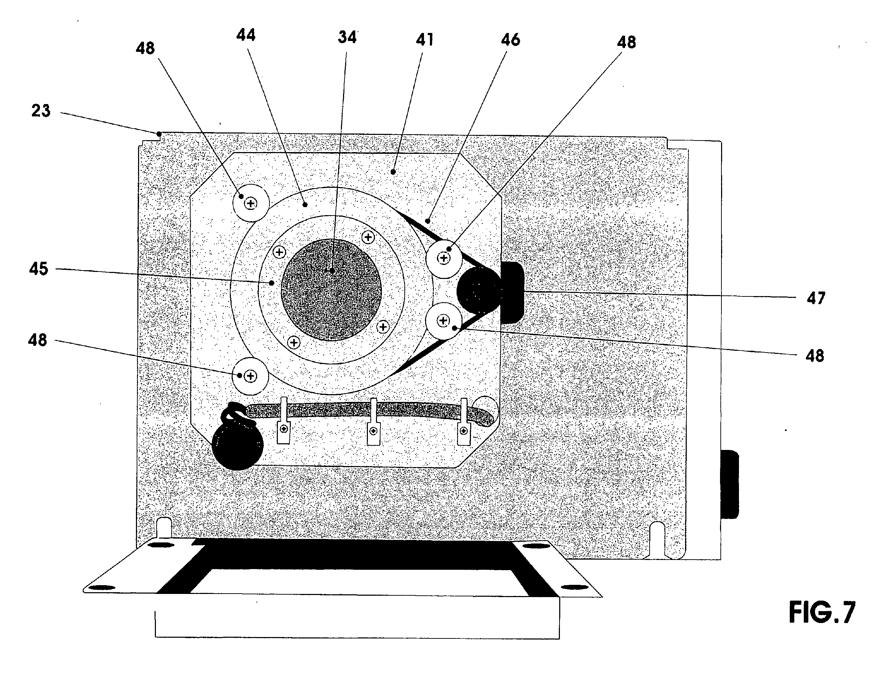

Looking now at Figures 3 through to 7, which illustrate the box-like container 12 in the general shape of a parallelepiped and sized so as to be capable of being specifically adapted to the photo-finishing laboratory which it has to be associated with, it can be noticed that such a container is constituted by a thin carrying framework 23 of metal, plastics or any other suitable material, in the general shape of a parallelepiped, on which a unit for the formation of the virtual photographic image and the passage of the light beam projecting this virtual image onto the photographic paper to be exposed and developed is mounted, wherein such a unit is arranged in correspondence of a perforated zone (not shown) of said carrying framework 23, which in this example is situated on the left side of said carrying framework, and provided through the whole thickness of the same framework, and wherein such a unit comprises a whole set of component parts arranged in mutually overlapping and coinciding positions in correspondence of said perforated zone of the carrying framework, in which said component parts include at least a traditional transparent LCD device 24, in which the virtual digital image of each single photogram, i.e. exposure to be developed, coming from the personal computer 13, is created and through which the light beam generated by the lighting unit 20 passes to project such a virtual photographic image, a diaphragm or shutter 25, of a moving type, which is adapted to co-operate with said LCD device 24 in the manner that will be described in greater detail further on, a rotating circular disk 26 subdivided into three identical sectors 27, 28 and 29, containing dichroic printing filters and spaced from each other by the same angular distance, coloured in the red, green and blue colours, respectively, wherein said disk is driven rotatably in a stepping manner in such a way, according to such an operating sequence and to such a functional purpose as described in greater detail further on, and finally two optical polarizing filters 30 and 31 (see Figure 7). The relative arrangement of the various component parts of this assembly is such as to ensure that the light beam generated by the lighting unit 20 is caused to pass in a sequence through: the coloured rotating disk 26, a heat filter 32 that retains the ultraviolet and infrafed radiations so as to prevent overheating occurrences, a polarizing filter 30, the LCD device 24, the other polarizing filter 31, another heat filter 33 for retaining UV and infrared radiations, a pixel rounding-off device 34 constituted by a rotating inclined glass operating in the manner that will be explained further on, the shutter 25 when the same is displaced from the path of the light beam, and finally a through-aperture 35 (see Figure 3) provided in the protective cover 36 enclosing the framework 23 in a position coinciding with all of the above mentioned component parts.

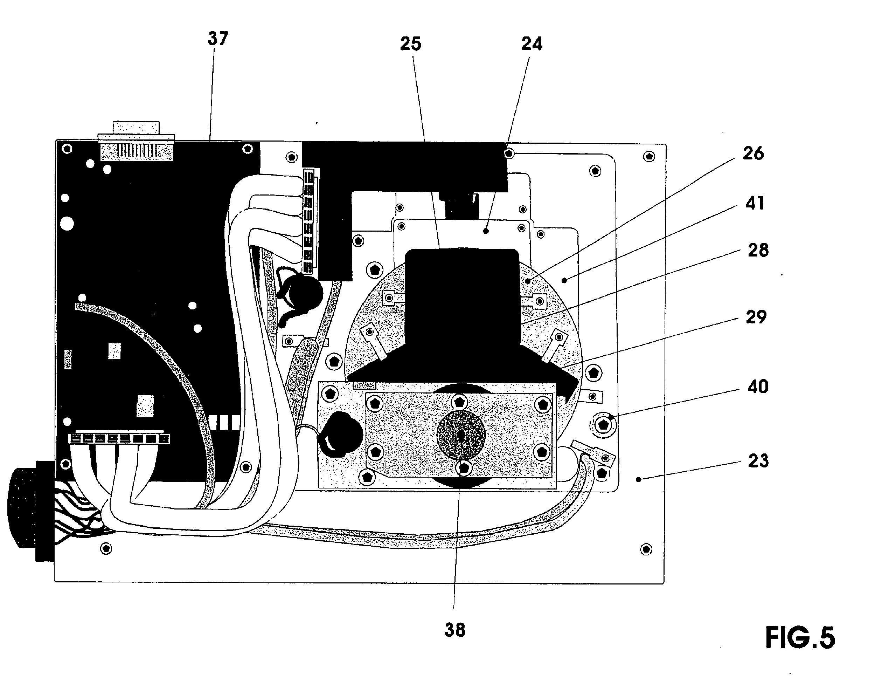

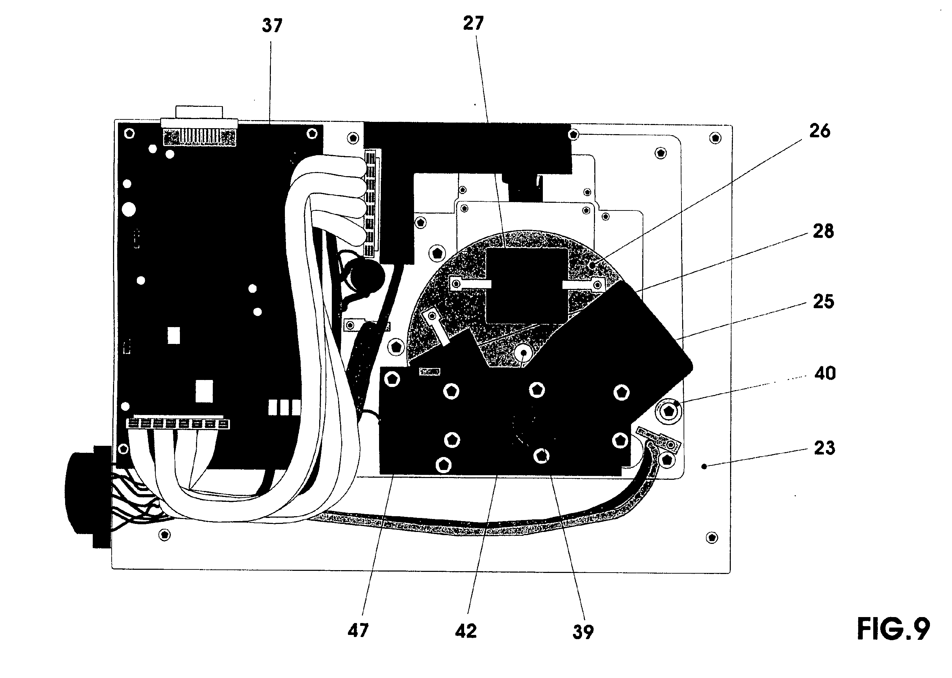

On the carrying framework 23 there is further installed at least an electronic board 37, connected with the driver of the LCD device 24. The shutter 25 is in the shape of a parallelepiped and is pivotally hinged at an end portion thereof on a vertical pin 38 in the carrying framework 23 in such a manner as to be at a slight distance vertically from the rotating coloured disk 26, and to be capable of extending horizontally to such a length as to completely cover the coloured sectors of the same rotating disk during the rotation thereof, in which said shutter is operated by an electromagnet 39 of its own about said pin 38 along a circular path by a pre-determined angle and in a pre-determined direction of rotation, while the end-of-travel positions of said moving shutter are delimited, i.e. defined by corresponding fixed stop means 40. In this way, the shutter 25 is capable of being displaced into two different operational positions, from a resting position shown in Figure 5, in which it is moved into coinciding with the passage path of the light beam and the virtual digital photographic image, thereby preventing such a passage and the resulting exposure of the photographic paper, to a working position shown in Figure 9, in which it is moved aside, i.e. away from such a passage path, thereby enabling the photographic paper to be exposed and the photographic prints to be formed accordingly.

Said electromagnet 39 is energized by a short electric pulse generated by the control circuit, thereby determining the temporary displacement of the shutter 25 into the moved-aside working position thereof, in which it abuts against the corresponding stop means 40, for a time as required for the light beam to pass through and properly expose the virtual digital image. Then, upon de-energizing, said electromagnet 39 is restored into its initial condition, thereby causing the shutter to automatically move back into the resting position thereof.

The rotating coloured disk 26 is in turn supported by a quadrangular plate 41 attached to the carrying framework, in the perforated zone thereof, and is pivotally hinged on to said plate by means of a vertical pin 42. In addition, this rotating disk has a plane top surface 43 that is arranged opposite to and slightly spaced from the shutter 25, in which there are provided corresponding seats accommodating the coloured dichroic filters 27, 28 and 29 in such a manner that these coloured filters are able to arrange themselves with their exposed top surfaces on the same level, i.e. flush with the plane surface 43. on its upper portion, the framework 23 is provided with two cylindrical concentric and rotating bushes 44 and 45 containing the slightly inclined non-reflecting glass forming the pixel rounding-off device 34, in which said bushes are driven to rotate continuously in a single direction of rotation by means of a drive belt 46 passing round the circumference of the outer bush 44 and a driving pulley 47, which is pivotally hinged on the plate 41, and guided along by means of a set of idle pulleys 48. The rotation of the rotating coloured disk 26 causes the coloured filters to be selectively displaced in correspondence of the passage path of the light beam, for each printing programme, and when a coloured filter turns out to be respectively so displaced in correspondence of said passage path of the light beam, the rotation of said disk 26 is temporarily stopped and the shutter 25 is actuated to move from the initial resting position to the working position thereof, thereby moving away from the passage path of the light beam, so that it enables said light beam to pass therethrough and the virtual coloured digital image to be therefore projected through said filter onto the photographic paper, so as to expose the latter.

At the end of such an operation, the shutter 25 is then caused to move back into the resting position thereof, thereby interrupting the passage of the light beam, while the disk 26 is driven rotatably in the same direction of rotation as before, until another coloured filter is moved into the same position previously taken by the former filter. Then, the rotation of the disk 26 is again stopped and the shutter 25 is moved again into the working position thereof, thereby enabling the light beam to pass through this coloured filter and the virtual digital image to be projected therethrough onto the photographic paper so as to expose the latter.

Finally, following the same operational sequence also the last coloured filter of the disk 26 is first brought into position in correspondence of the passage path of the light beam and then moved away therefrom, thereby determining on the photographic paper the superimposition of three identical images coloured in the three primary colours, i.e. red, green and blue, which, by combining together, determine the ultimate colouring of the photographic image to be printed, with the hues, saturations, gradations, sharpness, brightness, etc. as actually picked up from the original scene or object.

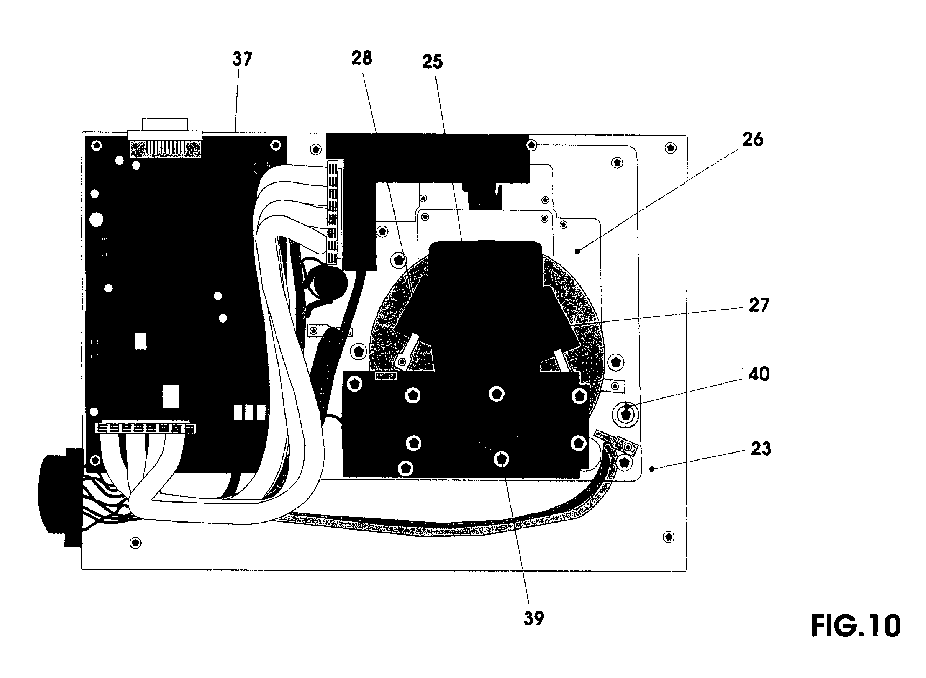

This kind of printing is basically a low-definition one. The control of the rotation of the coloured disk 26 is carried out by means of appropriate control devices, such as for instance a potentiometer 49 that is operationally connected in the control circuit and arranged in the rotation path of the coloured disk so as to interact therewith, as well as so rated as to be able to most precisely identify both the initial position of said disk and the various angular displacements thereof, causing it to stop in the positions in which the coloured filters are selectively arranged in correspondence of the passage path of the light beam, for the afore mentioned reasons. Such a potentiometer is furthermore so rated or adjusted as to be able to command, for each position at which the rotation of the coloured disk stops, each filter to move into a position that is exactly coincident with the LCD device 24. Figure 10 is shown to illustrate the coloured disk in an operational phase following the one illustrated in Figure 9, in which it is driven again into rotating , after a coloured filter has been arranged in the due position during the preceding phase, and in which no other coloured filter is arranged yet in the due position in correspondence of the passage path of the light beam, i.e. in the condition in which the shutter 25 is still switched in its resting position.
The LCD device 24 is in turn provided, as usual, with an array of pixels close to each other and arranged along horizontal and vertical lines, forming the digital images, as formed by 1250 x 1024 pixels in the example being considered, whose driver is operationally connected with the video board of the computer 13, so as to be able to receive from the latter the data stored therein of each photograph to be printed and developed, belonging to one or more orders prearranged in the same computer, and in response to such input data it then acts to progressively illuminate all corresponding pixels with an intensity that is proportional to the characteristics of the same image, thereby forming this virtual image in the reticle of the LCD device for the subsequent illumination of such a virtual image by the light beam and the resulting creation of the photographic prints in the afore described manner.

During the formation of the virtual image, the LCD device 24 is subject to the action of a set of piezo-electric actuators or similar means (not shown) that are operationally connected with the electronic control circuit of the box-like casing 14, are arranged externally with respect to the LCD device itself, and are adapted to act on the outer edges of the various peripheral sides of the same LCD device, in which said actuators are commanded so as to bring about minimum displacements against each side of the LCD device in view of determining the formation of virtual digital images to a high-definition standard in the manner described below. In these virtual images, furthermore, the continuous rotation of the inclined glass of the pixel rounding-off device 34 creates the effect of "shading off' the gaps, i.e. void intervals existing between the various pixels, thereby bringing about an optical effect of continuity among the same pixels that considerably improves the resulting virtual image and, therefore, also the image of the photographic print.

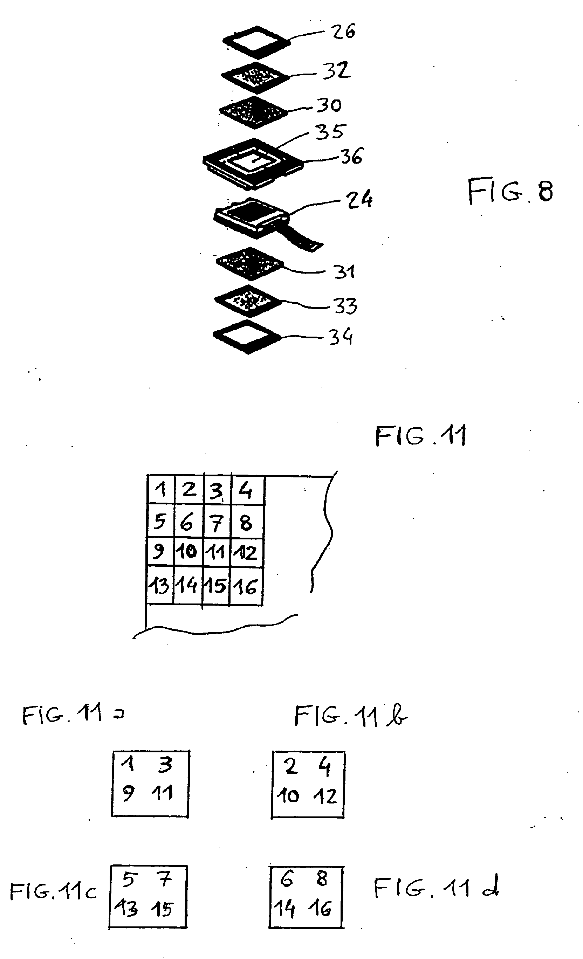

The manner in which a high-definition virtual digital image is obtained in the LCD device 24 is now illustrated with reference to Figures 11, 11a, b, c, d.

Figure 11, in particular, shows an enlarged view of the composition of such a virtual image, which is formed by both the existing pixels that are aligned with respect to each other in the horizontal direction and superimposed in a column-like manner to further pixels that are in turn aligned with respect to each other in the horizontal direction, and the same pixels which are displaced of an amount equal to a half-pixel, such that to permit high resolution images to be produced. In the present example, it is shown a portion of an image to be printed (see Fig. 11), which is divided into four sub-images (see Figs.11a,b,c,d), having a size equal to the size of the LCD device 24 and which will be then projected on to the photographic paper, as it will be described.

From Fig.11a it is noted that the LCD device 24 is stationary in the initial position thereof, in which the first sub-image constituted by the pixels 1,3,9,11 (uneven columns and rows) is arranged into coincidence which each colored filter, and under this condition the image formed by such pixels is projected on to the photographic paper through each colored filter of the disc 26, thereby providing for the overlapping of the three identical images, which are colored with the three main colors of these filters.

From Fig. 11b it is noted that the LCD device 24 has now been displaced by another actuator, and under this condition the second sub-image constituted by the pixels 2,4,10,12 (even columns and uneven rows), which will be positioned at ½ pixel to right with respect to their preceding position, will be arranged into coincidence with each colored filter, and under this condition the image formed by such pixels will be projected on to the photographic paper, which is still stationary on the same preceding position, through each colored filter of the disc 26, thereby overlapping it on to the previously formed images.

From Fig.11c it is noted that the LCD device 24 has been now displaced by another actuator, in a manner to arrange the third sub-image constituted by the additional pixels 5,7,13,15 (uneven columns and even rows), which will be positioned at ½ pixel downward and ½ pixel toward left with respect to their preceding position, into coincidence with each colored filter, and under this condition there are repeated the same operations with the same previously described results.

From Fig.11d it is noted that the LCD device 24 has been now displaced by another actuator, in a manner to arrange the fourth sub-image constituted by the pixels 6,8,14,16 (even columns and rows), which will be positioned at ½ pixel toward right with respect to their preceding position, into coincidence with each colored filter, and under this condition there are repeated the same operations with the same previously described results.

In the accordance with the invention, it is also possible to effect the same displacements with the actuators on to the LCD device 24 for each colored filter respectively coinciding.

As a result of these operations, the photographic paper is impressed with a series of colored images wich are overlapped to each other and are formed by the pixels of each image which are displaced firstly on a position an then on another position of an amount equal to a half-pixel, and the overlapping of all these images produces a final resulting image with high resolution.

Illustrated in Figure 12 is at this point the electrical wiring and connection schematics of the control arrangement according to the present invention, which can be noticed to comprise an electronic control circuit that is capable of being housed in the box-like casing 14 and the box-like container 12, as in the case considered here, or even in containers or casings of any other kind, and is implemented in appropriate electronic boards or even in a single electronic board or module, which are in any case installed in such casings or containers. This circuit is substantially constituted by at least a CPU 50, or the like, which is adapted to control the execution of all operating phases through the pre-established sequences of the control arrangement of the present invention and the photo-finishing laboratory which said control arrangement is associated to, as well as to manage the exchange of computer data relating to the photographic print programmes to be performed, between the computer 13, the control arrangement of the invention and the associated photo-finishing laboratory, in accordance with the data stored in the computer 13, in which said CPU is energized from an external power supply 51 and operationally connected, via an interface 52, with both the computer 13, which is in turn connected with a related keyboard 53 for setting and entering all data concerning the photographic print programmes to be carried out, and all component parts of the control arrangement of the invention and, in particular, with the devices provided to operate these component parts, such as the pixel rounding-off device 34 via an interface 54, the piezo-electric actuators of the LCD device 24 via an interface 55, the driving motor of the rotating coloured disk 26 via an interface 56, the electromagnet 35 of the shutter 25 via an interface 57, and the driver of the LCD device 24 via an interface 57', which is in turn connected with the computer 13 via an interface of its own for energizing and controlling all internal parameters of the LCD device, in which all these component parts are energized from a single power supply 58.

Said CPU 50 is furthermore connected operationally, via at least a serial cable 17 and related interfaces (not indicated), with the various components of the circuits of the photo-finishing laboratory which it is associated to, such as in particular the lighting unit 29, the handling and feeding devices 50 for the photographic paper 60, and all other control and actuation component parts (not shown) of the same photo-finishing laboratory. Finally, said CPU 50 is connected to a keyboard 61 for setting and commanding both the various component parts of the control arrangement according to the present invention, in order to obtain the virtual digital images with the characteristics as required in the same control arrangement, and the control and actuation component parts of the associated photo-finishing laboratory, in synchronism with the control arrangement of the present invention, so as to obtain the required digital photographic prints from these virtual digital images. According to the present invention it is also possible, with the same criteria as described above, for the photographic print process to be controlled in different photo-finishing laboratories which may also be of different make, i.e. made by different manufacturers.

When setting the various photographic printing programmes to be carried out in the photo-finishing laboratory in which the control arrangement according to the present invention is installed, the related data are entered in the computer 13 via the associated keyboard 51, from which the CPU 50 is then driven with a set of individual commands to carry out the related printing operation. Fully appreciated can at this point be the advantages offered by the control arrangement according to the present invention, which is compatible, i.e. capable of working together without any modification, with both professional-scale and/or amateur-scale photographic laboratories of any type and make, in which it can be most easily and quickly installed, thereby providing them with the capability of printing digital colour photographs without any need for component parts or even the operation of the photographic laboratories themselves to undergo any modification, in which said digital colour photographs can be printed quickly and effectively in a large-scale, fast-rate and low-cost manner.

## Claims

1. Control arrangement adaptable to any kind of professional-scale and/or amateur-scale photographic development and printing laboratory in view of obtaining corresponding digital photographs, in which each such laboratory comprises at least a printing apparatus and a developing apparatus provided with photographic paper and at least a lighting unit adapted to expose the photographic paper to a light beam to set and form the related photographic images on the same paper, in which the files concerning the digital photographic images to be printed, as derived from electronically scanned slides, negatives, photographs and the like, are preliminarily entered and stored in computer means, such as for instance a personal computer, operated via at least an associated keyboard, thereby constituting corresponding virtual negative images assembled into various orders according to the various customers, and in which these stored virtual images are processed individually or collectively via said operational keyboard in view of obtaining special effects, or for any other reason whatsoever, as far as their arrangement, progressive printing order, format and size, number of copies to be printed, possible blow-ups, particular features or items to be specially emphasized in the photographic prints, photo-retouches and any other artifice are concerned as may possibly be requested, **characterized in that** it comprises virtual digital image formation means (24), which are operationally connected with said computer means (13) and are adapted to receive from such computer means the virtual digital negative images stored therein and to selectively reconstitute the same virtual digital images; colouring means (26) cooperating with said image formation means (24) and adapted to colour each virtual digital negative image contained in the same means; displacement means co-operating with said image formation means (24) so as to determine the displacement of the latter into such positions as to enable high-definition images to be formed; shutter means (25) of a moving type co-operating with said image formation means (24) and movable from a first to a second operational position so as to prevent or enable the passage of a light beam through said image formation means (24) and said colouring means (26) and the resulting projection of the virtual digital images, with superimposed colours, on to said photographic paper (60); and control and command means (CPU 50) operated via at least an associated keyboard (61) and connected with said computer means (13), said image formation means (24), said colouring means (26), said displacement means, said shutter means (25), said lighting unit (20), said photographic paper (60) and the other component parts of the printing apparatus and the development apparatus of each photographic laboratory.

2. Control arrangement according to claim 1, **characterized in that** said image formation means (24), said colouring means (26), said displacement means and said shutter means (25) are mounted in a carrying framework (23) of plastic material housed in a box-like container (12) that is so sized and shaped as to be capable of being fitted and secured to any photographic laboratory which it has to be associated with.

3. Control arrangement according to claim 2, **characterized in that** said said image formation means (24) comprise at least a transparent LCD device (24) which is comprised of a plurality of pixels arranged close to each other along both horizontal and vertical lines, and is operationally connected with said computer means (13) so as to receive from them the virtual digital images to be printed for each order received, in such a manner as to activate all pixels contributing to the formation of these virtual digital images.

4. Control arrangement according to claim 3, **characterized in that** said colouring means comprise a rotating circular disk (26) provided with three dichroic filters (27, 28, 29) spaced by a same angular distance from each other and coloured in the three primary colours red, green and blue, in which said rotating disk (26) is pivotally hinged on to a plate (41) attached to said carrying framework (23) in a perforated zone thereof in close proximity of said LCD device (24), and is rotatably driven by a motor of its own so as to be able to selectively move, in a single direction of rotation, each filter in correspondence of both the passage path of said light beam and said LCD device (24).

5. Control arrangement according to claim 4, **characterized in that** said rotating circular disk (26) is associated with a potentiometer (49), or the like, which is operationally connected in the control circuit and arranged in the path of rotation of the same disk so as to be able to interact therewith, in which said potentiometer (45) is so set and rated as to be able to exactly identify both the initial position of said disk (26) and the various angular displacements thereof, and to cause the same rotating disk (26) to stop in those positions in which the related coloured filters (27, 28, 29) find themselves arranged selectively in coincidence with the passage path of the light beam from said lighting unit (20).

6. Control arrangement according to claim 3, **characterized in that** said displacement means comprise piezo-electric actuators, or similar means, connected with said control and command means (50) and arranged externally to said LCD device (24), and adapted to act on the outer edges of the various peripheral sides of the same LCD device, in which said piezo-electric actuators are operated so as to perform very slight displacements against each such side of the LCD device (24) in such a manner as to arrange the latter with its pixels in positions that are displaced by an extent equal to a semipixel, in order to project the virtual images of the so displaced pixels, as coloured with the colours of said filters (27, 28, 29), on to said photographic paper (60) by superimposing said images to those obtained through said LCD device (24), without any displacement of the latter.

7. Control arrangement according to claim 4, **characterized in that** said shutter means (25) comprise a shutter (25) pivotally hinged at an end portion thereof in said carrying framework (23) in such a manner as to be at a slight distance vertically from said rotating coloured disk (26), and to be capable of extending horizontally to such a length as to completely cover said coloured filters (27, 28, 29) during the rotation of the same rotating disk, in which said shutter (25) is actuated to move from said first to said second operational positions, and vice-versa, about said pivotally hinging means, by actuation means (electromagnet 39) that are electrically connected with said control and command means (50), so as to reach the pre-set operational positions as delimited, i.e. defined by corresponding fixed stop means (40).

8. Control arrangement according to claim 5, **characterized in that** it further comprises a first and a second polarizing filter (30, 31) and a pixel rounding-off device (34), formed by an inclined rotating glass contained within two concentric bushes (44, 45) actuated into continuous rotation by actuating means (belt 46 and driving pulley 47), and adapted to "shade off" the gaps or void intervals existing between the various pixels, thereby determining an optical continuity effect that improves the resulting image, in which the relative arrangement of the various component parts is such as to ensure that the light beam generated by said lighting unit (20) is caused to pass in a sequence through said coloured rotating disk (26), a heat filter (32) provided to retain ultraviolet and infrared radiation and so prevent overheating occurrences, said first polarizing filter (30), said LCD device (24), said second polarizing filter (31), another heat filter (33), said pixel rounding-off device (34), and said shutter (25) as displaced into the second operational position thereof.
